# DEMANDE DE BREVET EUROPEEN

(11) **EP 3 035 185 A1**
(43) Date de publication de la demande: **22.06.2016**
(21) Numéro de dépôt: 15198515.7
(22) Date de dépôt: 08.12.2015
(51) Int. Cl.: G06F 3/0488, G06F 3/0484, G06F 3/039

(54) **AIDE AU TRANSFERT DE DONNÉES SUR UNE INTERFACE TACTILE**

(30) Priorité: 15.12.2014 FR 1462441
(71) Demandeur: Orange, 75015 Paris (FR)
(72) Inventeur: GUEGAN, Delphine, 35830 BETTON (FR); JUMPERTZ, Sylvie, 35000 RENNES (FR); WOLFF, Juliette, Montreal, QC H2G 3A3 (CA)
(74) Mandataire: Froger, Marie-Hélène

(57) **Abrégé**

L'invention se rapporte à un procédé d'aide au transfert de données entre un utilisateur émetteur et un utilisateur récepteur à l'aide d'une interface tactile d'un écran de terminal. Chaque utilisateur possède un portefeuille de données et est représenté sur l'écran par une représentation graphique. Le procédé est tel qu'il comporte les étapes de glissement (E201) sur l'écran du terminal de la représentation graphique de l'utilisateur émetteur vers la représentation graphique de l'utilisateur récepteur, d'envoi (E202), à une unité de gestion, d'une commande d'initialisation du transfert de données du portefeuille de données de l'utilisateur émetteur vers le portefeuille de données de l'utilisateur récepteur lorsque la représentation graphique de l'utilisateur émetteur est à une distance prédéfinie de la représentation graphique de l'utilisateur récepteur, d'envoi (E206), à l'unité de gestion, d'une commande de validation du transfert de données lorsque la représentation graphique de l'utilisateur récepteur s'éloigne (E205) de la représentation graphique de l'utilisateur émetteur, et d'envoi (E204), à l'unité de gestion, d'une commande d'annulation du transfert de données lorsque la représentation graphique de l'utilisateur émetteur s'éloigne (E203) de la représentation graphique de l'utilisateur récepteur. Elle se rapporte également à un dispositif mettant en oeuvre le procédé.

## Description

La présente invention se rapporte au domaine des interactions entre utilisateurs pour un transfert de données et plus particulièrement sur une aide au transfert à partir d'interactions sur une interface tactile.

Dans de nombreuses situations de la vie courante, il est souvent nécessaire d'effectuer un transfert de données d'une personne à une autre.

Par exemple, au sein d'une même famille, il est courant que les parents allouent de l'argent de poche à leurs enfants ou adolescents.

Lorsque l'argent est sur un compte bancaire, le transfert peut s'effectuer par virement bancaire. Pour initier ce virement bancaire et allouer la bonne somme, il est nécessaire de rentrer explicitement un montant avant que le transfert ne puisse se faire.

Le fait de rentrer explicitement un montant peut être source d'erreur par une mauvaise manipulation sur un clavier ou par une méconnaissance pour des personnes qui ne sont pas habitué à manipuler des chiffres ou qui ont des difficultés à lire ou écrire.

Le problème se pose également pour d'autres types de transfert de données comme par exemple les droits sur les quantités de données allouées sur un forfait téléphonique ou internet ou bien d'autres somme de données à partager. Ce type de transfert peut également être virtuel et provisoire pour une application de jeu où des échanges de quantité de données sont effectués entre joueurs. Dans tous les cas, l'utilisateur qui veut transférer électroniquement une quantité de données à un autre utilisateur, doit saisir textuellement une somme prédéterminée dans un fichier de transfert ou bien choisir parmi des quantités proposées.

Les erreurs de saisie ou la méconnaissance des outils de transfert existants peuvent engendrer un accroissement des échanges de communication entre des terminaux appartenant à l'utilisateur souhaitant transférer ses données et des serveurs de gestion de transfert. De plus, le temps demandé pour ce type d'opération est pour certains utilisateurs, très important. Cela contribue à une consommation d'énergie plus importante, les opérations initiant le transfert de ces données étant souvent fastidieuses et n'étant pas à la portée de tout individu. Il est important d'éviter toute consommation d'énergie superflue notamment pour les appareils électriques nécessitant une recharge de batterie.

Il existe donc un besoin de faciliter ce type d'interaction pour permettre au plus grand nombre d'effectuer efficacement ce type de transfert.

La présente invention vient améliorer la situation.

A cet effet, elle propose un procédé d'aide au transfert de données entre un utilisateur émetteur et un utilisateur récepteur à l'aide d'une interface tactile d'un écran de terminal, tel que chaque utilisateur possède un portefeuille de données et est représenté sur l'écran par une représentation graphique. Le procédé est tel qu'il comporte les étapes suivantes :
- glissement sur l'écran du terminal de la représentation graphique de l'utilisateur émetteur vers la représentation graphique de l'utilisateur récepteur ;
- envoi, à une unité de gestion, d'une commande d'initialisation du transfert de données du portefeuille de données de l'utilisateur émetteur vers le portefeuille de données de l'utilisateur récepteur lorsque la représentation graphique de l'utilisateur émetteur est à une distance prédéfinie de la représentation graphique de l'utilisateur récepteur ;
- envoi, à l'unité de gestion, d'une commande de validation du transfert de données lorsque la représentation graphique de l'utilisateur récepteur s'éloigne de la représentation graphique de l'utilisateur émetteur ; et
- envoi, à l'unité de gestion, d'une commande d'annulation du transfert de données lorsque la représentation graphique de l'utilisateur émetteur s'éloigne de la représentation graphique de l'utilisateur récepteur.

Ainsi les interactions sur l'interface proposée sont simples à exécuter et ne demande pas de manipulation explicite de chiffre ou de tableaux. Le transfert de données selon l'invention est donc à la portée d'un très grand nombre d'individus. Le processus d'interface ainsi proposée permet une interaction homme machine plus efficace et moins consommatrice en temps et en énergie sur le terminal, que les méthodes existantes de l'art antérieur. Ce procédé permet donc un gain de temps non négligeable par rapport aux techniques classiques de transfert de données et évitent les erreurs de saisie qui pouvaient exister avec les systèmes actuels.

Dans un mode de réalisation particulier, un paramètre d'affichage de la représentation graphique d'un utilisateur varie en fonction de la quantité de données restante dans son portefeuille et est mis à jour suite à l'envoi d'une commande de validation du transfert.

Une visualisation immédiate et claire du transfert est ainsi proposée aux utilisateurs du procédé de transfert.

Dans un premier mode de réalisation, les étapes de glissement et d'éloignement des représentations graphiques s'effectuent par interaction tactile et mouvement tactile sur l'écran.

Les interactions tactiles sur les écrans de tablette ou de terminaux sont à la portée d'un grand nombre de personnes et sont simples à exécuter. L'interface homme machine pour effectuer le transfert est alors très efficace.

Selon un mode particulier, le procédé comporte en outre une étape de création d'un objet graphique représentant le transfert de données en provenance de l'utilisateur émetteur, à la détection d'un contact tactile de l'utilisateur émetteur sur sa représentation graphique affichée sur l'écran, la taille de l'objet graphique variant en fonction de la quantité de donnée à transférer. La commande de validation du transfert comporte une information sur la quantité de donnée à transférer.

L'objet graphique ainsi créé représente de façon tangible ce qui va être transféré ce qui renforce d'autant plus l'efficacité de l'interface homme machine.

Dans une réalisation particulière, la quantité de données à transférer est déterminée en fonction de la durée de contact tactile détecté sur l'écran, sur l'objet graphique représentant le transfert de données.

Ainsi, il est facile de changer la somme à transférer sans pour autant manipuler ou saisir des chiffres, ce qui est source d'erreur. L'interaction utilisateur est simple à exécuter et ne nécessite qu'un minimum de temps par rapport à une saisie textuelle. De plus, la visualisation de la somme à transférer est tangible pour les utilisateurs du procédé.

Dans une variante de réalisation, la quantité de données à transférer est déterminée en fonction d'un geste tactile de rotation sur l'écran autour de l'objet graphique représentant le transfert de données.

De même, ce type d'interaction est simple à exécuter. Ce mode de réalisation permet non seulement d'augmenter la somme de données par un geste dans un premier sens de rotation mais aussi de la diminuer par un geste dans un second sens de rotation.

Dans un deuxième mode de réalisation, les étapes de glissement et d'éloignement des représentations graphiques s'effectuent par l'interaction de pions identifiés sur l'interface tactile de l'écran et par le déplacement des pions sur l'écran, un pion étant associé à un utilisateur.

L'utilisation de pions dédiés à des personnes permet d'une part d'authentifier facilement la personne associée au pion. Le fait de déplacer un pion sur une interface est une interaction simple qui ne nécessite pas de connaissances informatiques particulières. Cette action est donc à la portée d'un très grand nombre d'individu.

Dans un mode de réalisation particulier, le procédé comporte une étape d'authentification d'un pion sur l'interface tactile de l'écran, l'authentification nécessitant le contact physique de l'utilisateur sur son pion.

Ce mode de réalisation apporte une sécurité supplémentaire puisque les pions respectifs de l'utilisateur récepteur et de l'utilisateur émetteur doivent être authentifiés sur l'interface tactile par la présence physique des deux utilisateurs. Dans le cas où le procédé est mis en oeuvre sur un unique dispositif, alors le transfert ne se fait que lorsque les deux personnes sont présentes, ce qui évite le transfert par erreur vers une autre personne. L'accord des deux personnes est alors immédiat.

Selon un mode particulier, le procédé comporte en outre les étapes de création d'un objet graphique représentant le transfert de données en provenance de l'utilisateur émetteur, à la détection du contact du pion de l'utilisateur émetteur sur l'interface tactile de l'écran; de détermination de la quantité de données à transférer en fonction d'un angle de rotation donné au pion de l'utilisateur émetteur sur l'interface tactile de l'écran, la taille de l'objet graphique variant en fonction de la quantité de donnée déterminée. La commande de validation du transfert comporte une information de la quantité de donnée déterminée.

Ce mode de réalisation permet également une interaction simple pour faire varier la somme de données à transférer sans qu'il ne soit nécessaire de manipuler ou de saisir des chiffres, ce qui est source d'erreur. L'interaction utilisateur est simple à exécuter et ne nécessite qu'un minimum de temps par rapport à une saisie textuelle. De plus, la visualisation de la somme à transférer est tangible pour les utilisateurs du procédé.

Ce mode de réalisation permet non seulement d'augmenter la somme de données par un premier sens de rotation mais aussi de la diminuer par un second sens de rotation. L'effet sur la quantité de données à transférer est immédiatement visible par la taille de l'objet graphique correspondant.

La présente invention se rapporte également à un dispositif d'aide au transfert de données entre un utilisateur émetteur et un utilisateur récepteur comportant un écran avec une interface tactile. Chaque utilisateur possède un portefeuille de données et est représenté sur l'écran par une représentation graphique, le dispositif comportant :
- un module de détection d'un glissement sur l'écran de la représentation graphique de l'utilisateur émetteur vers la représentation graphique de l'utilisateur récepteur ;
- un module d'envoi de commande apte à envoyer vers une unité de gestion, une commande d'initialisation du transfert de données du portefeuille de données de l'utilisateur vers le portefeuille de données de l'utilisateur récepteur lorsque le module de détection détecte que la représentation graphique de l'utilisateur émetteur est à une distance prédéfinie de la représentation graphique de l'utilisateur récepteur ;
- le module d'envoi de commande étant apte à envoyer vers une unité de gestion, une commande de validation du transfert de données lorsque le module de détection détecte que la représentation graphique de l'utilisateur récepteur s'éloigne de la représentation graphique de l'utilisateur émetteur ; et à envoyer une commande d'annulation du transfert de données lorsque le module de détection détecte que la représentation graphique de l'utilisateur émetteur s'éloigne de la représentation graphique de l'utilisateur récepteur.

Ce dispositif présente les mêmes avantages que le procédé décrit précédemment, qu'il met en oeuvre.

L'invention vise également un terminal comportant un tel dispositif.

Elle vise un programme informatique comportant des instructions de code pour la mise en oeuvre des étapes du procédé d'aide au transfert tel que décrit, lorsque ces instructions sont exécutées par un processeur.

Enfin l'invention se rapporte à un support de stockage, lisible par un processeur, intégré ou non au dispositif d'aide au transfert, éventuellement amovible, mémorisant un programme informatique mettant en oeuvre un procédé d'aide au transfert tel que décrit précédemment.

D'autres caractéristiques et avantages de l'invention apparaîtront plus clairement à la lecture de la description suivante, donnée uniquement à titre d'exemple non limitatif, et faite en référence aux dessins annexés, sur lesquels :
- la figure 1 illustre un système comportant un dispositif d'aide au transfert de données selon un mode de réalisation de l'invention ;
- la figure 2 illustre sous forme d'organigramme les principales étapes d'un procédé d'aide au transfert de données selon un mode de réalisation de l'invention ;
- Les figures 3a, 3b, 4a, 4b, 4c et 4d illustrent les interactions mises en oeuvre sur l'interface tactile de l'écran du dispositif selon l'invention, dans un premier mode de réalisation ;
- Les figures 5a, 5b, 5c et 5d illustrent les interactions mises en oeuvre sur l'interface tactile de l'écran du dispositif selon l'invention, dans des modes particuliers de réalisation;
- Les figures 6a et 6d illustrent les interactions mises en oeuvre sur l'interface tactile de l'écran du dispositif selon l'invention, à l'aide de pions dans un deuxième mode de réalisation ;
- les figures 6b et 6c illustrent la configuration de deux pions selon un mode particulier de réalisation de l'invention ; et
- la figure 7 illustre un exemple de réalisation matérielle d'un dispositif d'aide au transfert de données selon l'invention.

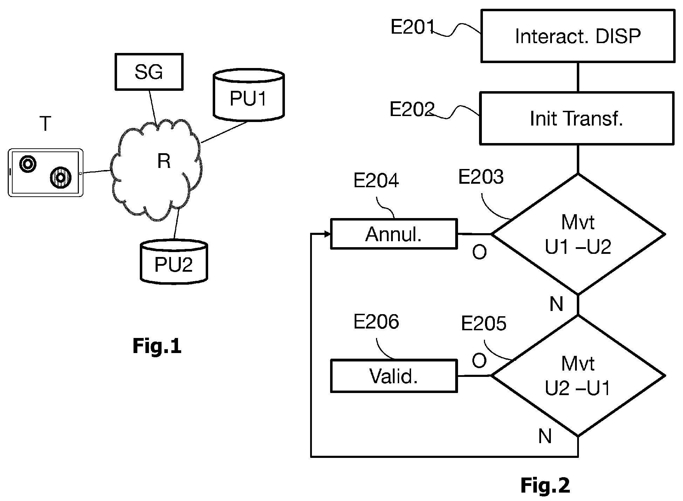

La **figure 1** représente les principaux éléments d'un système de communication comportant un terminal T muni d'un écran avec une interface tactile apte à interagir avec au moins un utilisateur. L'écran tactile de ce terminal est capable de contrôler une pluralité de contacts tactiles sur sa surface. Le terminal représenté en T peut être par exemple, une tablette électronique, un téléphone mobile de type « smartphone », une table multimédia à écran tactile ou plus généralement tout équipement électronique possédant un écran d'interface tactile. Ce terminal communique via un réseau R avec un serveur de gestion de transfert de données SG. Ce serveur est apte à collecter des informations de transfert de données entre un portefeuille de données PU1 d'un premier utilisateur et un portefeuille de données PU2 d'un second utilisateur.

Ce serveur de gestion peut également communiquer avec d'autres serveurs de gestion des portefeuilles respectifs comme par exemple un serveur bancaire lorsque le transfert de données concerne une somme d'argent ou encore le serveur d'un opérateur télécom lorsque le transfert de données concerne une attribution de droits d'accès à internet ou un temps de communication.

Dans un mode de réalisation possible, le terminal T comporte une unité de gestion de transfert de données et comporte également les données des portefeuilles respectifs des utilisateurs du transfert. Ce mode de réalisation est par exemple choisi pour des applications de transfert d'un jeu.

Le terminal met en oeuvre une application de transfert de données et détecte les interactions mise en oeuvre sur son interface tactile pour déterminer d'une part l'émetteur et le destinataire du transfert, les données à transférer et la quantité de données à transférer dans un mode de réalisation de l'invention. Ce terminal met en oeuvre un procédé d'aide au transfert de données décrit à présent en référence à la **figure 2****.**

L'application de transfert de données mise en oeuvre par le terminal T affiche par exemple différentes représentations d'un ensemble d'utilisateurs prédéfinis en mémoire dans le terminal par exemple lors d'une étape de configuration de l'application.

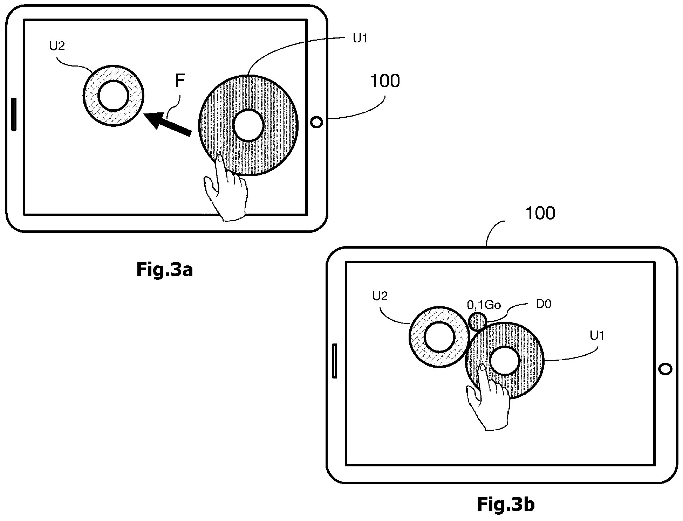

Comme illustré en référence à la **figure 3a**, une représentation d'un premier utilisateur est affichée en U1 et une représentation d'un second utilisateur est illustrée en U2. Par soucis de lisibilité, seules les représentations de deux utilisateurs sont illustrées. Le nombre de représentations pouvant bien évidemment être supérieur à deux.

L'illustration, sur la figure 3a, d'une représentation d'un utilisateur est ici sous la forme d'une figure géométrique en forme d'anneau. Une autre forme géométrique peut bien sûr être choisie, la représentation peut également être affichée sous la forme d'une image, d'un pictogramme, d'une photo ou toute autre illustration.

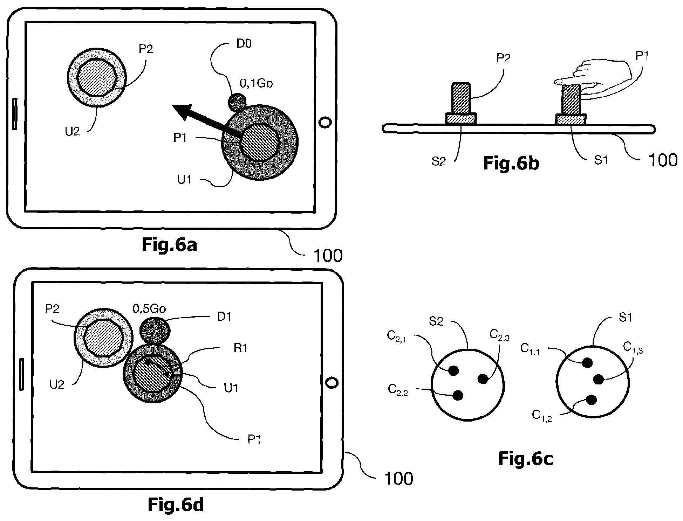

L'étape E201 de la figure 2 est une étape d'interaction utilisateur sur l'interface tactile du terminal T. Cette étape d'interaction consiste en un glissement de la représentation graphique d'un premier utilisateur vers une représentation graphique d'un second utilisateur comme représenté par la flèche F à la figure 3a dans le cas où cette étape de glissement s'effectue par une interaction tactile avec le doigt de l'utilisateur. Cette interaction peut également être effectuée à l'aide d'un stylet ou à l'aide d'un pion en contact avec la surface tactile comme expliqué ultérieurement dans un second mode de réalisation en référence aux figures 6a à 6d. Cette interaction est effectuée par l'initiateur du transfert de données, c'est-à-dire par l'utilisateur émetteur U1. Le second utilisateur étant alors l'utilisateur récepteur U2.

L'interface tactile comporte en effet des moyens de détection d'un contact tactile sur l'écran et de la position de ce contact sur l'écran. Les moyens de détection sont aptes à détecter le déplacement du contact et la direction du déplacement. L'affichage de la représentation sous le point de contact suit le mouvement du contact sur l'écran. L'interface du terminal détecte la distance entre l'affichage de la représentation de l'utilisateur émetteur et celle de l'utilisateur récepteur. Lorsque cette distance atteint une valeur prédéfinie, par exemple 0 ou quelques millimètres, le terminal obtient les informations d'identité de l'utilisateur émetteur (position du contact initial) et d'identité de l'utilisateur récepteur (position d'arrêt du mouvement).

Le terminal envoie alors à l'étape E202, une commande d'initialisation du transfert de données à une unité de gestion de transfert par exemple par des moyens de communication si l'unité de gestion est dans un serveur de gestion SG dans un réseau de communication ou bien à une unité de gestion de transfert interne au terminal. Cette commande comporte au moins les identifiants à la fois de l'utilisateur émetteur et de l'utilisateur récepteur. La commande peut également comporter le type de données à transférer selon par exemple le type d'application de transfert mis en oeuvre dans le terminal.

Dans un mode de réalisation particulier, lors de cette étape E202, un objet graphique est créé et affiché sur l'écran du terminal pour matérialiser le transfert. Cet objet graphique illustré en **figure 3b** est référencé D0. Il est représenté sous la forme d'un cercle mais peut être de forme différente. Il peut correspondre par exemple à une quantité par défaut de données à transférer. Dans un exemple de réalisation où l'application de transfert de données concerne un transfert de crédit de consommation internet à partager pour une offre internet d'un opérateur, une quantité par défaut peut par exemple être de 0,1 Go. Pour une application de type transfert d'argent, la quantité par défaut peut par exemple être de 10€. Bien évidemment d'autres quantités par défaut peuvent être définies.

Dans d'autres types d'application où les données sont des fichiers multimédias, par exemple des photos, alors l'objet graphique affiche la photo à transférer d'une base de données de l'utilisateur émetteur.

Comme illustré également sur la figure 3b, la représentation graphique de l'utilisateur émetteur comporte un paramètre qui varie en fonction de la quantité de données restante dans le portefeuille de l'utilisateur. Ici, c'est l'épaisseur de l'anneau qui varie et on peut voir que celle-ci a diminué à la création de l'objet graphique de transfert. Cela représente donc de manière tangible l'impact qu'aura le transfert de données sur les données restantes de l'utilisateur.

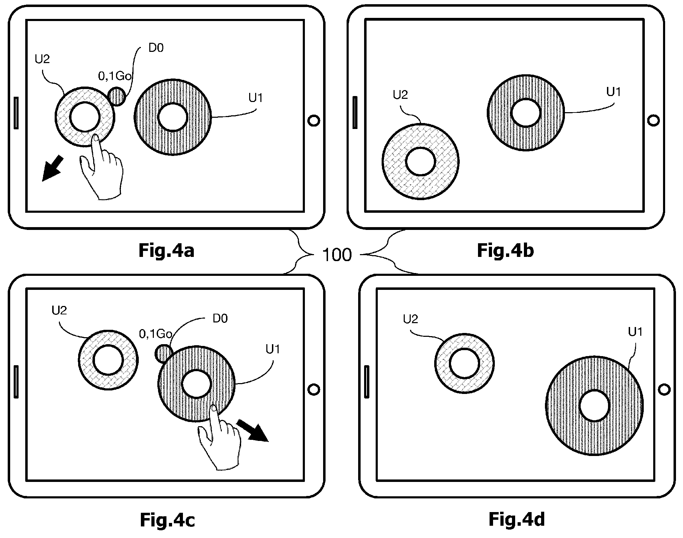

Le terminal identifie alors le type d'interaction tactile effectué sur les représentations respectives des utilisateurs émetteur et récepteur. Si l'interface utilisateur détecte (O en E203) à l'étape E203 que la représentation graphique de l'utilisateur émetteur (U1) s'éloigne de la représentation graphique de l'utilisateur récepteur (U2) comme illustré en **figure 4c****,** par exemple par un glissement de cette représentation dans une direction opposée à celle de l'emplacement affichée de la représentation de l'utilisateur récepteur, alors l'étape E204 est mise en oeuvre. Cela veut dire par exemple que l'utilisateur émetteur a renoncé au transfert de données.

A l'étape E204, une commande d'annulation du transfert de données est envoyée à l'unité de gestion de transfert de données. L'unité de gestion annule donc la préparation du transfert.

Si l'interface détecte (O en E205) à l'étape E205 que la représentation graphique de l'utilisateur récepteur s'éloigne de la représentation graphique de l'utilisateur émetteur comme illustré en **figure 4a**, par exemple par un glissement de cette représentation dans une direction opposée à celle de l'emplacement affichée de la représentation de l'utilisateur émetteur, alors l'étape E206 est mise en oeuvre.

A l'étape E206, une commande de validation du transfert de données est envoyée à une unité de gestion de transfert de données, soit en local dans le terminal soit sur un serveur de gestion sur un réseau de communication. Cette unité de gestion gère le transfert des données du portefeuille de l'utilisateur émetteur vers le portefeuille de l'utilisateur récepteur en traduisant les données reçues de l'interface utilisateur sur l'identité des utilisateurs respectifs et le cas échéant les informations de quantité de données à transférer. L'unité de gestion, peut communiquer avec d'autres serveurs de gestion pour réaliser le transfert, par exemple à des serveurs bancaires ou à des serveurs d'opérateurs internet dans les exemples de réalisation décrits.

Pour une gestion d'application de jeu où un échange de données par exemple d'argent virtuel est à effectuer, la gestion se fait en interne dans le terminal. L'unité de gestion transfère les données de la base de données comportant le portefeuille d'un premier joueur vers la base de données comportant le portefeuille d'un second joueur.

Lorsque la commande est envoyée, les représentations respectives des utilisateurs récepteur et émetteur varient en fonction de la quantité restante dans leur portefeuille. Ainsi, comme illustré en référence à la **figure 4b****,** les données du portefeuille de l'utilisateur U1 ont diminuées (l'anneau représentant U1 a rétréci) alors que les données du portefeuille de l'utilisateur U2 a augmenté (l'anneau représentant l'utilisateur U2 a augmenté).

Dans le cas où aucune des représentations graphiques des utilisateurs n'est déplacée (N en E203 et N en E205), après une temporisation donnée, alors l'étape E204, est mise en oeuvre et le transfert de données ne se fait pas.

Là aussi, les représentations respectives des utilisateurs récepteur et émetteur varient en fonction de la quantité de données restante dans le portefeuille. Comme illustré à la **figure 4d****,** lorsque le transfert est annulé, la représentation de l'utilisateur U1 reprend sa taille initiale puisque le transfert ne se fait pas et celle de l'utilisateur U2 ne varie pas.

Dans le mode de réalisation décrit où la quantité de données transférée est une valeur par défaut, l'interaction permettant le transfert peut être effectuée plusieurs fois jusqu'à obtenir la quantité de données transférée voulue.

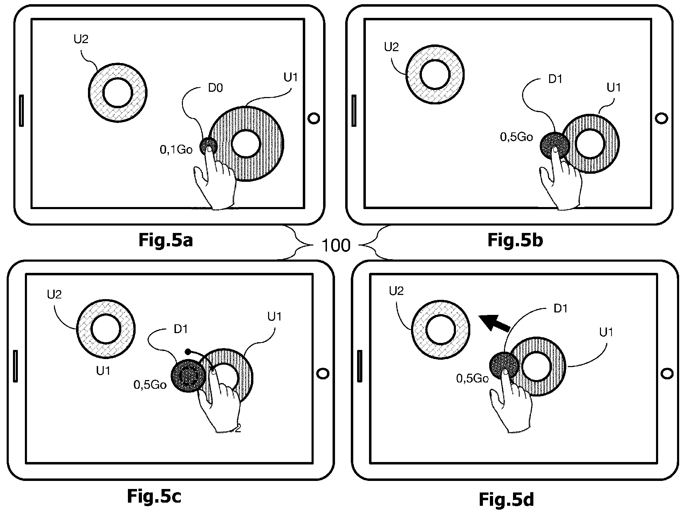

Dans un autre mode de réalisation illustré en **figure 5a et 5b****,** la quantité de données à transférer est déterminée par une action sur l'objet graphique représentant le transfert de données. Cet objet graphique peut par exemple être créé lors d'un contact avec une représentation graphique de l'utilisateur émetteur, ici U1 sur la figure 5a. La valeur la quantité de données à transférer est déterminée ici en fonction de la durée de contact tactile détectée sur l'écran, sur l'objet graphique représentant le transfert de données. Ainsi, la quantité de données passe de la valeur 0,1 Go à la valeur 0,5 Go, tel qu'illustré par D0 et D1 aux figures 5a et 5b. La taille de l'objet graphique représentant le transfert varie également en fonction de la quantité de donnée ainsi déterminée.

Dans une variante de réalisation, la quantité de données à transférer est déterminée en fonction d'un geste tactile de rotation sur l'écran autour de l'objet graphique représentant le transfert de données comme illustré à la **figure 5c****.** Là aussi, la quantité passe à la valeur 0,5 Go dans l'exemple illustré et l'objet graphique D1 change de taille à mesure que la quantité augmente. Le transfert peut alors être initié par la mise en oeuvre de l'étape E201 et E202 par le glissement à la fois de la représentation graphique de l'utilisateur émetteur vers la représentation graphique de l'utilisateur récepteur et de l'objet graphique associé représentant le transfert. Ceci est illustré en référence à la **figure 5d****.** Dans un autre mode possible de réalisation, la détermination de la quantité de données à transférer soit par le mode de réalisation illustré à la figure 5b, soit par celui illustré à la figure 5c peut se faire après l'étape de glissement. Dans le cas où le transfert de données est bien validé à l'étape E206, alors cette commande comporte également l'information de la quantité de donnée ainsi déterminée sur l'interface tactile de l'écran.

Dans le mode de réalisation décrit ci-dessus, les actions de glissement et de déplacement des représentations graphiques peuvent être effectuées par deux utilisateurs du transfert ou par un seul utilisateur. Les actions sur l'écran peuvent aussi n'être prises en compte par le terminal qu'après une étape d'authentification, par exemple par la composition d'un code soit de façon textuelle soit de façon gestuelle sur l'interface tactile.

De plus, dans un mode de réalisation possible de l'invention, ces étapes de glissement ou de déplacement peuvent être effectuées par deux utilisateurs sur des terminaux distants. Dans ce cas, les représentations graphiques des deux utilisateurs sont affichées sur les terminaux distants, communiquant entre eux par exemple via un réseau de communication mobile. Les déplacements d'une représentation graphique provoqués par l'action d'un utilisateur sur son écran tactile sont communiqués au dispositif distant qui affiche sur son écran, ces déplacements. La validation ou l'annulation du transfert s'effectuent selon les déplacements des représentations graphiques. De même, les actions sur l'interface tactile permettant de déterminer le montant du transfert sont aussi communiquées au dispositif distant pour un affichage sur son écran.

Dans un deuxième mode de réalisation de l'invention, les étapes de glissement et d'éloignement des représentations graphiques s'effectuent par l'interaction de pions identifiés sur l'interface tactile de l'écran et par le déplacement des pions sur l'écran, un pion étant associé à un utilisateur. En effet, dans cet exemple de réalisation, un pion, est un objet physique que possède un utilisateur du dispositif d'aide au transfert. Dans un exemple de réalisation d'un tel pion, celui-ci possède une pluralité de points de contact (par exemple trois) sur la face inférieure qui est posée sur la surface de l'écran tactile du dispositif. Les figures 6b et 6c représentent deux pions P1 et P2 avec chacun une surface S1 et S2 en contact avec l'écran tactile du dispositif 100. Ces surfaces sont pourvues de points de contacts respectifs C_{1,1}, C_{1,2} et C_{1,3} pour la surface S1 du pion P1 et C_{2,1}, C_{2,2} et C_{2,3} pour la surface S2 du pion P2. Ces points de contact ou picots, de par leur disposition différente sur la face inférieure du pion, constituent une signature identifiant le pion.

Afin de détecter ces picots sur la surface du pion en contact avec l'écran tactile, celui-ci est par exemple de type capacitif. Un exemple de réalisation de pions et d'écran capacitif est décrit dans la demande de brevet WO 2012/017205. Les différentes dispositions des picots permettent ainsi à l'interface de la surface tactile de détecter quel pion est posé sur l'écran. Dans une famille par exemple, une étape de configuration enregistre l'association d'un pion avec un membre de la famille de sorte que lorsqu'un pion est posé sur l'écran du terminal, celui-ci détecte la présence de l'utilisateur associé.

L'écran peut alors afficher par exemple la représentation de cet utilisateur sous la position du pion sur l'écran comme représenté en figure 6a pour les pions P1 et P2 et les représentations U1 et U2.

Les pions ainsi disposés, permettent aux utilisateurs d'effectuer encore plus facilement les interactions sur l'interface tactile de l'écran selon le procédé décrit à la figure 2. Le glissement de la représentation de l'utilisateur U1 vers la représentation de l'utilisateur U2 s'effectue par le déplacement du pion P1 vers le pion P2 comme illustré à la figure 6a.

Les étapes E203 à E206 décrites aux figures 2 et aux figures 4a à 4d sont mises en oeuvre par le déplacement des pions sur la surface tactile de l'écran. De même, comme décrit à la figure 3b, un objet graphique représentant le transfert de données peut également être créé sur l'écran à proximité de la représentation de l'utilisateur émetteur. Cet objet graphique est représenté en D0 sur la figure 6a.

L'initialisation du transfert de données de l'étape E202 de la figure 2 peut être mise en oeuvre soit par le déplacement d'un seul pion, par exemple P1 vers P2 soit par les déplacements des deux pions, à la fois P1 et P2. Lorsque les représentations graphiques des utilisateurs émetteur et récepteur sont à une distance prédéfinie, par exemple 0, alors l'étape d'initialisation est mise en oeuvre.

Dans un mode de réalisation particulier, l'identification du pion en contact avec l'écran s'effectue lorsque l'utilisateur est en contact avec le pion par exemple avec sa main comme représenté en figure 6b. Dans ce cas, le pion est en matériau conducteur de sorte que l'écran capacitif détecte la présence de l'utilisateur sur le pion. Dans ce mode de réalisation particulier, le transfert de données peut être validé qu'à la condition que les utilisateurs respectifs sont bien en contact avec leur pion respectif.

L'interface du terminal vérifie donc ce critère avant la mise en oeuvre de l'étape E206. Cette vérification constitue une étape d'authentification du pion sur l'interface qui nécessite le contact physique de l'utilisateur sur son pion. Ainsi, la sécurité du transfert est accrue puisqu'il est conditionné à la manipulation des pions par deux utilisateurs. Ces deux utilisateurs peuvent être physiquement présents ensemble sur un même dispositif. Cela représente alors un accord de main à main.

Dans un autre mode de réalisation, les deux utilisateurs peuvent être à distance sur des dispositifs différents, chacun ayant posé son pion sur l'interface tactile de son écran. L'affichage des représentations graphiques des deux utilisateurs est mis en oeuvre sur les deux dispositifs. Ceux-ci communiquent à travers un réseau de communication par exemple mobile et échangent les informations de déplacements et de mouvements des pions sur l'interface, de façon à mettre en oeuvre le procédé d'aide au transfert tel que décrit en référence à la figure 2.

De façon à déterminer la quantité de données à transférer d'un portefeuille utilisateur à un autre, l'interface tactile de l'écran détecte une rotation donnée au pion correspondant à l'utilisateur émetteur. Cette détection de la rotation d'un pion est possible par exemple, par une méthode de triangulation des trois points de contacts capacitifs tels que représentés à la figure 6c.

La figure 6d illustre cette étape de détermination de la quantité de données à transférer par la rotation du pion P1. la quantité de données passe alors d'une valeur D0 à une valeur D1 et l'objet graphique représentant le transfert de données grossit en conséquence. De même, comme illustré en figure 6d, la taille de la représentation graphique de l'utilisateur émetteur, ici U1, diminue à mesure que la quantité de données du transfert augmente.

A noter que cette modification de taille de la représentation graphique des utilisateurs peut se faire après que le transfert ait été validé.

L'interaction par les pions est très simple d'utilisation et est à la portée de tous.

Ce type d'interaction peut aussi être mis en oeuvre dans des applications de jeu interactif ou un pion représente un joueur.

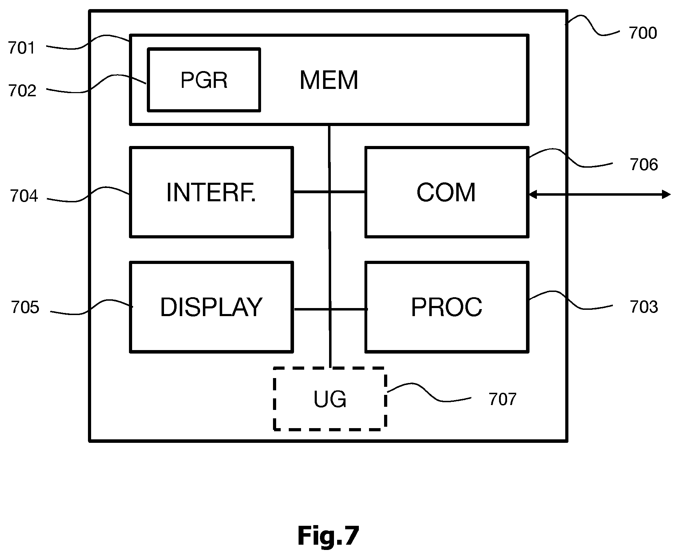

La **figure 7** illustre à présent une représentation matérielle d'un dispositif 700 d'aide au transfert de données selon un mode de réalisation de l'invention.

Le dispositif comprend un espace de stockage 701, par exemple une mémoire MEM, une unité de traitement 703 équipée par exemple d'un processeur PROC. L'unité de traitement peut être pilotée par un programme 702, par exemple un programme informatique PGR, mettant en oeuvre le procédé d'aide au transfert de donnée tel que décrit en référence à la figure 2, et notamment les étapes de glissement sur l'écran du terminal de la représentation graphique de l'utilisateur émetteur vers la représentation graphique de l'utilisateur récepteur, d'envoi, à une unité de gestion, d'une commande d'initialisation du transfert de données du portefeuille de données de l'utilisateur émetteur vers le portefeuille de données de l'utilisateur récepteur lorsque la représentation graphique de l'utilisateur émetteur est à une distance prédéfinie de la représentation graphique de l'utilisateur récepteur, d'envoi, à l'unité de gestion, d'une commande de validation du transfert de données lorsque la représentation graphique de l'utilisateur récepteur s'éloigne de la représentation graphique de l'utilisateur émetteur, et d'envoi, à l'unité de gestion, d'une commande d'annulation du transfert de données lorsque la représentation graphique de l'utilisateur émetteur s'éloigne de la représentation graphique de l'utilisateur récepteur.

Typiquement, la description de la figure 2 reprend les étapes d'un algorithme d'un tel programme informatique. Le programme informatique peut également être stocké sur un support mémoire lisible par un lecteur du dispositif ou téléchargeable dans l'espace mémoire de celui-ci.

La mémoire MEM enregistre de manière générale, toutes les données nécessaires à la mise en oeuvre du procédé.

À l'initialisation, les instructions du programme informatique 702 sont par exemple chargées dans une mémoire RAM (Random Access Memory en anglais) avant d'être exécutées par le processeur de l'unité de traitement 703. Le processeur de l'unité de traitement 703 met en oeuvre les étapes du procédé d'aide au transfert de données selon les instructions du programme informatique 702.
Pour cela, le dispositif comprend, outre la mémoire 701, des moyens de communication 706 (COM) permettant au dispositif de se connecter à un réseau de télécommunication et d'échanger des données avec d'autres dispositifs par l'intermédiaire du réseau de télécommunications, et en particulier d'envoyer les commandes d'initialisation, de validation ou d'annulation du transfert de données lorsque le serveur de gestion est externe au dispositif.
Dans le cas où l'unité de gestion est interne au dispositif, alors celui-ci comporte une unité de gestion 707 qui se charge d'affecter de nouvelles valeurs aux portefeuilles respectifs des utilisateurs du transfert. Ces portefeuilles respectifs sont par exemple enregistrés dans la mémoire MEM du terminal dans ce mode de réalisation.

Le dispositif comprend en outre une unité d'interfaçage tactile 704 avec un écran de visualisation 705. Cette unité d'interfaçage encore dénommée interface tactile, possède un module de détection apte à détecter les mouvements tactiles effectués sur l'écran pour déplacer des représentations graphiques affichées. Dans un deuxième mode de réalisation, cette interface tactile est capacitive et détecte la position, le déplacement et la rotation d'un pion comportant une pluralité de points de contact posé sur l'écran.

Selon un mode particulier de réalisation, le dispositif peut être intégré dans un terminal, par exemple un téléphone de type « smartphone », une tablette électronique ou autre équipement de communication, un ordinateur ou table multimédia.

## Revendications

1. Procédé d'aide au transfert de données entre un utilisateur émetteur et un utilisateur récepteur à l'aide d'une interface tactile d'un écran de terminal, **caractérisé en ce que** chaque utilisateur possède un portefeuille de données et est représenté sur l'écran par une représentation graphique, le procédé comportant les étapes suivantes :
- glissement (E201) sur l'écran du terminal de la représentation graphique de l'utilisateur émetteur vers la représentation graphique de l'utilisateur récepteur ;
- envoi (E202), à une unité de gestion, d'une commande d'initialisation du transfert de données du portefeuille de données de l'utilisateur émetteur vers le portefeuille de données de l'utilisateur récepteur lorsque la représentation graphique de l'utilisateur émetteur est à une distance prédéfinie de la représentation graphique de l'utilisateur récepteur ;
- envoi (E206), à l'unité de gestion, d'une commande de validation du transfert de données lorsque la représentation graphique de l'utilisateur récepteur s'éloigne (E205) de la représentation graphique de l'utilisateur émetteur ; et
- envoi (E204), à l'unité de gestion, d'une commande d'annulation du transfert de données lorsque la représentation graphique de l'utilisateur émetteur s'éloigne (E203) de la représentation graphique de l'utilisateur récepteur.

2. Procédé selon la revendication 1, **caractérisé en ce qu'**un paramètre d'affichage de la représentation graphique d'un utilisateur varie en fonction de la quantité de données restante dans son portefeuille et **en ce qu'**il est mis à jour suite à l'envoi d'une commande de validation du transfert.

3. Procédé selon l'une des revendications 1 ou 2, **caractérisé en ce que** les étapes de glissement et d'éloignement des représentations graphiques s'effectuent par interaction tactile et mouvement tactile sur l'écran.

4. Procédé selon la revendication 3, **caractérisé en ce qu'**il comporte en outre une étape de création d'un objet graphique représentant le transfert de données en provenance de l'utilisateur émetteur, à la détection d'un contact tactile de l'utilisateur émetteur sur sa représentation graphique affichée sur l'écran, la taille de l'objet graphique variant en fonction de la quantité de donnée à transférer et **en ce que** la commande de validation du transfert comporte une information sur la quantité de donnée à transférer.

5. Procédé selon la revendication 4, **caractérisé en ce que** la quantité de données à transférer est déterminée en fonction de la durée de contact tactile détecté sur l'écran, sur l'objet graphique représentant le transfert de données.

6. Procédé selon la revendication 4, **caractérisé en ce que** la quantité de données à transférer est déterminée en fonction d'un geste tactile de rotation sur l'écran autour de l'objet graphique représentant le transfert de données.

7. Procédé selon l'une des revendications 1 ou 2, **caractérisé en ce que** les étapes de glissement et d'éloignement des représentations graphiques s'effectuent par l'interaction de pions identifiés sur l'interface tactile de l'écran et par le déplacement des pions sur l'écran, un pion étant associé à un utilisateur.

8. Procédé selon la revendication 7, **caractérisé en ce qu'**il comporte une étape d'authentification d'un pion sur l'interface tactile de l'écran, l'authentification nécessitant le contact physique de l'utilisateur sur son pion.

9. Procédé selon l'une des revendications 7 ou 8, **caractérisé en ce qu'**il comporte en outre les étapes de :
- création d'un objet graphique représentant le transfert de données en provenance de l'utilisateur émetteur, à la détection du contact du pion de l'utilisateur émetteur sur l'interface tactile de l'écran;
- détermination de la quantité de données à transférer en fonction d'un angle de rotation donné au pion de l'utilisateur émetteur sur l'interface tactile de l'écran, la taille de l'objet graphique variant en fonction de la quantité de donnée déterminée ;
et en ce la commande de validation du transfert comporte une information de la quantité de donnée déterminée.

10. Dispositif d'aide au transfert de données entre un utilisateur émetteur et un utilisateur récepteur comportant un écran avec une interface tactile, **caractérisé en ce que** chaque utilisateur possède un portefeuille de données et est représenté sur l'écran par une représentation graphique, le dispositif comportant :
- un module de détection (704) d'un glissement sur l'écran de la représentation graphique de l'utilisateur émetteur vers la représentation graphique de l'utilisateur récepteur ;
- un module d'envoi de commande (706) apte à envoyer vers une unité de gestion, une commande d'initialisation du transfert de données du portefeuille de données de l'utilisateur vers le portefeuille de données de l'utilisateur récepteur lorsque le module de détection (704) détecte que la représentation graphique de l'utilisateur émetteur est à une distance prédéfinie de la représentation graphique de l'utilisateur récepteur ;
- le module d'envoi de commande (706) étant apte à envoyer vers une unité de gestion, une commande de validation du transfert de données lorsque le module de détection (704) détecte que la représentation graphique de l'utilisateur récepteur s'éloigne de la représentation graphique de l'utilisateur émetteur ; et à envoyer une commande d'annulation du transfert de données lorsque le module de détection (704) détecte que la représentation graphique de l'utilisateur émetteur s'éloigne de la représentation graphique de l'utilisateur récepteur.

11. Terminal **caractérisé en ce qu'**il comporte un dispositif selon la revendication 10.

12. Programme informatique comportant des instructions de code pour la mise en oeuvre des étapes du procédé d'aide au transfert de données selon l'une des revendications 1 à 9, lorsque ces instructions sont exécutées par un processeur.

13. Support d'enregistrement lisible par un processeur sur lequel est enregistré un programme informatique comprenant des instructions pour l'exécution des étapes du procédé d'aide au transfert de données selon l'une des revendications 1 à 9.
